# EUROPÄISCHE PATENTSCHRIFT

(11) **EP 3 492 901 B1**
(45) Veröffentlichungstag und Bekanntmachung des Hinweises auf die Patenterteilung: **01.09.2021**
(21) Anmeldenummer: 18000918.5
(22) Anmeldetag: 23.11.2018
(51) Int. Cl.: G01N 1/38, B01F 5/04, G01N 15/00, G01N 1/22

(54) **VORRICHTUNG UND VERFAHREN ZUM VERDÜNNEN EINES AEROSOLS**
DEVICE AND METHOD FOR DILUTING AN AEROSOL
DISPOSITIF ET PROCÉDÉ DE DILUTION D'UN AÉROSOL

(30) Priorität: 30.11.2017 DE 102017011075
(43) Veröffentlichungstag der Anmeldung: 05.06.2019
(73) Patentinhaber: Palas GmbH Partikel-und Lasermesstechnik, 76229 Karlsruhe (DE)
(72) Erfinder: Mölter, Leander, 76744 Wörth am Rhein (DE); Notheis, Ralf, 76661 Philippsburg (DE); Roman, Joachim, 76229 Karlsruhe (DE); Schmidt, Martin, 76227 Karlsruhe (DE)
(74) Vertreter: Lichti - Patentanwälte Partnerschaft mbB

(56) Entgegenhaltungen:
- GB-A- 2 259 982
- NO-A1- 20 141 443
- US-A- 3 854 321

## Beschreibung

Die Erfindung betrifft eine Vorrichtung und ein Verfahren zum Verdünnen eines Aerosols.

Ein Aerosol ist ein partikeltragendes Gas oder Gasgemisch, insbesondere Luft. Derartige Aerosole müssen aus verschiedensten Gründen untersucht werden.

Insbesondere bei zur Untersuchung verwendeten zählenden Messverfahren, mit denen die Zahl der durch ein Messvolumen strömenden Partikel pro Zeiteinheit und gegebenenfalls auch deren Größe erfasst wird, darf jeweils im Messvolumen nur ein Partikel gleichzeitig vorhanden sein. Bei hochkonzentrierten Aerosolen ist dies nicht gesichert. Sind zwei oder mehr Partikel gleichzeitig in einem Messvolumen, so führt dies zu Koinzidenzfehlern. Diese sind zum einen ein Zählfehler, da die Zahl der Partikel zu niedrig erfasst wird, weil beispielsweise zwei oder mehr Partikel nur als ein Partikel erfasst werden. Darüber hinaus ergibt sich ein Größenfehler, da mehrere Partikel als nur einer betrachtet wird, wird dieser zu groß erfasst.

Aus diesem Grunde sind daher hochkonzentrierte Aerosole zu verdünnen. Eine Reduzierung der Wahrscheinlichkeit solcher Fehler bis zu einem praktischen Ausschluss derselben kann dadurch geschehen, dass das Aerosol durch partikelfreies Gas verdünnt wird. Grundsätzlich kann hierzu ein externes Gas oder Gasgemisch, insbesondere auch Reinluft zugeführt werden. Nachteilig kann sein, dass dieses nicht die gleichen Parameter hat wie das Trägergas oder -gemisch des Aerosols, beispielsweise eine andere Feuchte und/oder Temperatur, wodurch die Messergebnisse verfälscht werden können.

Es ist bekannt beispielsweise gemäß der VDI Richtlinie VDI 3491, Blatt 15, Ziffer 4, Seite 4, das zuströmende Aerosol als Eintritts-Aerosol in zwei Aerosolströme aufzuspalten und zum einen den größeren Anteil durch einen Filter zu pumpen, der das Aerosol in diesem Zweig reinigt und ein Reingas oder Reingasgemisch, insbesondere auch partikelfreie Luft erzeugt, zum anderen in einem Bypass einen geringen Teil des Aerosols durch eine Kapillare - mit einem Innendurchmesser von 1 mm bei 150 mm Länge - zu leiten und stromab von Filter und Pumpe einerseits und Kapillare andererseits die beiden Ströme wieder zusammenzuführen und den Mischstrom der Sensoreinrichtung zuzuführen.

Nachteilig ist hierbei insbesondere, dass aufgrund des geringen Durchmessers der Kapillare sich Partikel, insbesondere flüssige Partikel, an der Wandung der Kapillare abscheiden, damit die Zusammensetzung des aus der Kapillare austretenden Aerosols verändern und damit auch das Messergebnis verfälschen können. Darüber hinaus besteht die Gefahr, dass die Kapillare verschmutzt. Aus diesem Grunde ist auch eine laufende Überwachung des Zustandes der Kapillare notwendig.

Die US 3,854,321 zeigt eine Vorrichtung zum Erzeugen eines fokussierten Aerosolstrahls. Hierzu weist die Vorrichtung eine Aerosolquelle 16 auf, aus der ein relativ dünnes Rohr mit einem Düsenauslass 15 in einen Mischraum mit zum Durchmesser des Rohrs 15 relativ großem Durchmesser ragt, in den achsparallel Reingas geführt wird. Das Aerosol wird - unter Beimischung von Reingas - durch eine - sich verjüngende - Düse 13 als fokussierter Aerosolstrahl durch zwei in Richtung des Aerosolstrahls aufeinanderfolgende mit Abstand zueinander angeordnete Lichtstrahlen 18a, 18b geleitet, wobei deren durch Teilchen des Aerosols gestreutes Licht in einem Fotodetektor detektiert werden kann. Anschließend werden die Partikel des Aerosols auf einem Target 17 abgelagert. Das Aerosol wird mittels einer Vakuumpumpe durch die Vorrichtung gesaugt. Das beschriebene Verfahren basiert wesentlich hierauf und damit hohen Differenzdrucken. Darüber hinaus wird notwendigerweise eine Fokussierung des Aerosolstroms vorgesehen, was wiederum die erhebliche Beschleunigung des Aerosols in der Düse und hohe Relativgeschwindigkeiten zwischen Aerosolstrom und umgebenden Verdünnungsgas voraussetzt. Darüber hinaus kann eine Partikelmessung nur unter reduziertem Druck gegenüber dem Probenahmendruck erfolgen, was für leichtflüchtige Komponenten schädlich ist, da durch die Düsenexpansion in den Unterdruck (Vakuum) eine adiabate Abfüllung des Aerosols erfolgt. Eine Verdünnung wird durch den Unterdruck und die hohen Geschwindigkeiten erreicht, wobei dies auch zum Auseinanderlaufen von Teilchen unterschiedlicher Größe führt. Es kann keine zuverlässige repräsentative Messung der Teilchengrößenverteilung durchgeführt werden. Auch ist der Innendurchmesser des Austrittrohres größer das 1,4-fache des Außendurchmessers des Einlassrohres.

Darüber hinaus wird bei diesem Gegenstand eine Größenbestimmung bestenfalls aufgrund der schon angesprochenen unterschiedlichen Strömungsgeschwindigkeit erreicht, da Teilchen unterschiedlicher Größe mit unterschiedlichem zeitlichem Abstand in den beiden Lichtstrahlen detektiert werden. Hierzu ist die Messung zweier Signale und des zeitlichen Versatzes derselben notwendig, was, wie gesagt, zur Größenbestimmung unterschiedliche Beschleunigung der Partikel durch die hohe Relativgeschwindigkeit zwischen Gas und Partikel durch die Düsenbeschleunigung ins Vakuum voraussetzt. Eine Partikelgrößenbestimmung durch die Intensität des Streulichts wird nicht vorgenommen.

Die GB 2 259 982 A zeigt ein Verfahren zur Probenahme von Verunreinigungskonzentrationen in einem Fluid. Dabei wird eine aus dem Fluid entnommene Probe in einem Gehäuse 1 mit einem Einlass 6 für ein Verdünnungsfluid verdünnt. Die verdünnte Probe gelangt von dort in eine Mischkammer 8 zur Ablagerung auf oder in einem Sammelmedium 14 zur Analyse, wobei das Fluid durch eine Pumpe 18 durch das Gehäuse 1 gezogen wird. Das Verfahren ist besonders bei hohen Schadstoffkonzentrationen von Nutzen. Schwebstoffe in H2O-Proben können ebenfalls bestimmt werden. Bei diesem Verfahren werden Verunreinigungspartikel, wie aber Asbestfasern, auf einem Sammelmedium abgeschieden, so dass nach einer gewissen Zeit die abgeschiedenen Asbestfasern gezählt werden. Durch die Verdünnung soll erreicht werden, dass auch bei Langzeitmessungen die Faserkonzentration die für eine genaue Analyse durch optische Mikroskopie gegebene Grenze nicht überschritten wird. Nachteilig ist, dass Konzentrationen und insbesondere Konzentrationsänderungen nicht unverzüglich, in Echtzeit, festgestellt werden können, sondern nur nach einer bestimmten Messdauer von bis zu acht Stunden und dass ein hoher Personalaufwand zum Bestimmen mittels optischer Mikroskopie erforderlich ist.

Auch offenbart die Druckschrift einen Innendurchmesser eines Austrittsrohrs der kleiner ist als der Innendurchmesser des Eintrittsrohres.

Die NO 2020141443 A1 zeigt eine Mischvorrichtung zum Kombinieren von Fluidströmen mit einer äußeren Fluidleitung für ein erstes Fluid mit einem Einlassende und einem Auslassende und mit einer inneren Fluidleitung für ein zweites Fluid mit einem Einlassende und einem Auslassende. Die innere Fluidleitung hat eine Auslassdüse an dem genannten Auslassende, wobei die Düse im wesentlichen axial innerhalb der äußeren Fluidleitung angebracht und so konfiguriert ist, dass sie das genannte zweite Fluid zum Auslassende der äußeren Fluidleistung leitet. Der Innendurchmesser der äußeren Fluidleitung ist etwa doppelt so groß wie der Innendurchmesser der inneren Fluidleitung. Infolgedessen werden das erste und das zweite Fluid, die durch die innere und die äußere Fluidleitung fließen, vereinigt und fließen zusammen in Richtung des Auslassendes der äußeren Fluidleitung.

Der Erfindung liegt die Aufgabe zugrunde, eine Vorrichtung und ein Verfahren zu schaffen, durch die insbesondere ein unerwünschtes verfälschendes Abscheiden von Partikeln, insbesondere Flüssigkeitspartikeln, aus dem Aerosol vermieden wird. Weiter soll eine präzisere Einstellung des Mischungsverhältnisses möglich sein, das für den Rückschluss auf die Partikelkonzentration und die Partikelgrößenverteilung im Eintritts-Aerosol erforderlich ist.

Erfindungsgemäß wird die genannte Aufgabe mit einer Vorrichtung der eingangs genannten Art gelöst, welche die Merkmale des Anspruchs 1 aufweist.

Weiterhin ist zur Lösung der genannten Aufgabe ein gattungsgemäßes Verfahren zum Verdünnen von Aerosol mit den Merkmalen des Anspruchs 12 vorgesehen.

Mittels der erfindungsgemäßen Vorrichtung und mittels des Verfahrens ist es insbesondere möglich auch Tröpfchenaerosole bis zu einem anderen Größenbereich von ca. 10 µm nahezu verlustfrei zu verdünnen.

Der Begriff eines Reingases bezeichnet ein von Flüssig- oder Feststoff-Partikeln befreites Gas als solches aus einer Gaskomponente oder ein Gasgemisch aus mehreren Einzelgasen, insbesondere partikelfreie Luft. Der das Einlassrohr umgebende Ringraum ist ein Raum mit einem ringförmigen Querschnitt. Äußerst bevorzugt sind Einlassrohr für das Aerosol und ein zu einer Messeinrichtung führender Messauslass fluchtend mit einer gemeinsamen Achse angeordnet. Das zu messende Aerosol strömt entlang der gemeinsamen Achse zum Einlassrohr und Messauslass.

Bevorzugte Ausgestaltungen der erfindungsgemäßen Vorrichtung zeichnen sich dadurch aus, dass der Abstand von Einlass- und Austrittsrohr geringer als der Innendurchmesser von Einlass- oder Austrittsrohr ist, insbesondere nicht mehr als 6 mm, höchst vorzugsweise mit mehr als 5 mm beträgt, wobei insbesondere die - radiale - Ringbreite des den Endbereich des Einlassrohres umgebenden Ringraums nicht größer ist als der Innendurchmesser des Einlassrohres, insbesondere dem 0,5-fachen des Innendurchmessers entspricht. In Weiterbildung ist insbesondere vorgesehen, dass der Innenquerschnitt Πr² von Einlass- oder Austrittsrohr größer als das 0,1-fache der Länge L des Einlassrohres - r, L bestimmt in mm - ist, mindestens aber 12 mm² beträgt. Vorzugsweise weist die Reingasleitung einen Massenflussregler (Mass Flow Controller - MFC) und eine Pumpe oder aber eine geregelte Pumpe und einen Massenflussmesser aufweist. Weiterhin kann erfindungsgemäß eine Reinigungseinrichtung in der Reingasleitung vorgesehen sein, wobei ein Einlass der Reingasleitung mit einer Fremdgasquelle, insbesondere der Umgebungsluft in Verbindung steht und/oder dass ein Einlass der Reingasleitung stromab des Austrittsendes des Einlassrohres für das Eintritts-Aerosol angeordnet ist, dass die Reingasleitung eine Reinigungseinrichtung zum Reinigen des über ihre Eintrittsöffnung in sie eintretenden Austritts-Aerosols aufweist.

Weiterbildungen sehen darüber hinaus vor, dass die optische Messeinrichtung zum Messen des Aerosols zwischen Austrittsrohr und Einlass zur Reingasleitung angeordnet ist, dass mit der vom Austrittsrohr zur Öffnung in den Ringraum führenden Reingasleitung eine Abzweigleitung verbunden ist, in der eine Pumpe und ein Massenflussregler zum Abzweigen eines bestimmten Teils des Reingases als Abluft angeordnet sind und/oder dass stromab der Einlassöffnung des Austrittsrohres im Ringraum eine seitliche Austrittsöffnung zum Abzweig eines bestimmten Anteils des Austrittaerosols vorgesehen und mit der Reingasleitung verbunden ist. Insbesondere kann erfindungsgemäß ein System zum Verdünnen eines Aerosols vorgesehen sein, bei dem zwei Vorrichtungen der vorstehend beschriebenen Art als Kaskade hintereinander angeordnet sind, wobei ein Austrittsrohr einer ersten, vorangehenden Vorrichtung mit dem Eintrittsrohr einer zweiten nachfolgenden Vorrichtung verbunden ist. Dabei sind vorzugsweise beide Kaskaden fluchtend zueinander angeordnet, das heißt Einlassrohr und Auslass der ersten Stufe und Einlassrohr und (Mess-)Auslass der zweiten Stufe fluchten sämtlich. Das Messaerosol strömt zur Messeinrichtung entlang einer gemeinsamen Achse der vorgenannten Ein- und Auslässe.

Das oben genannte erfindungsgemäße Verfahren kann in weiterer Ausgestaltung derart ausgebildet sein, dass das Reingas geregelt aus einer Fremdgasquelle, insbesondere als gereinigte Reinluft, aus der Umgebung zugeführt wird oder aber Austritts-Aerosol zu einem partikelfreien Reingas gereinigt und dieses zum Vermischen mit dem Eintritts-Aerosol rückgeführt wird, wobei weiterhin vorgesehen sein kann, dass das Eintritts-Aerosol über ein Einlassrohr zugeführt und das Austritts-Aerosol durch ein Austrittsrohr weitergeleitet werden, deren Innenquerschnitt Πr² größer als das 0,1-fache der Länge des Einlassrohres ist - r, L bestimmt in mm -, mindestens aber 12 mm² beträgt.

Weiterbildungen des erfindungsgemäßen Verfahrens sehen darüber hinaus vor, dass das Reingas in einen Ringraum geleitet wird, dessen Breite das 0,4- bis 2-fachen des Innendurchmessers des Einlassrohres beträgt, dass das Reingas dem Eintritts-Aerosol in einem Spalt zwischen Auslassende des Einlassrohrs und Einlassöffnung des Austrittsrohrs zugeführt wird, der geringer als der Innendurchmesser von Einlass- oder Austrittsrohr ist und vorzugsweise nicht mehr als 6 mm, insbesondere 5 mm beträgt und/oder dass das durch Mischen von Eintritts-Aerosol und Reingas erzeugte verdünnte Austritts-Aerosol in einem Austrittsrohr mit einem über dem Innendurchmesser des Einlassrohres liegenden Innendurchmesser eintritt, wobei der Unterschied des Innendurchmessers mindestens 1 mm bis 2 mm beträgt. Schließlich sehen weitere Ausgestaltungen vor, dass das Reingas dem Eintritts-Aerosol in einem fest vorgegebenen Volumendurchflussverhältnis zugeführt wird, dass das Verhältnis von Volumendurchfluss des Eintritts-Aersols und des diesem zugeführten Reingases durch einen Massenflussregler (MFC - Mass Flow Controller) bestimmt wird und/oder dass das Eintritts-Aerosol in einem Mischraum durch ein Einlassrohr zugeführt wird, das einen geringeren Querschnitt hat als der Ringraum und dass das dem Ringraum zugeführte Reingas oberhalb eines Auslassendes des Einlassrohrs in den Mischraum eingeleitet wird, wodurch eine intensive Durchmischung von Eintritts-Aerosol und Reingas bewirkt wird.

Darüber hinaus kann erfindungsgemäß vorgesehen sein, dass übermäßiges Reingas als Abluft abgeführt wird, wobei dann insbesondere stromab des Mischraums nur ein fester Teil des Austritts-Aerosols zur Reinigung abgezweigt und als partikelfreies Reingas stromauf des Mischraums wieder zugeführt wird und dabei darüber hinaus das nicht abgezweigte Austritts-Aerosol durch eine optische Messeinrichtung geführt wird.

In weiterer Ausbildung des Verfahrens ist vorgesehen, dass der nicht abgezweigte Teil des Austritts-Aerosols einem folgenden weiteren Mischraum zugeführt wird und dort eine weitere Verdünnung durchgeführt wird.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind. Dabei zeigt:
- Fig. 1: Eine erste Ausführungsform einer erfindungsgemäßen Vorrichtung zum Verdünnen von Aerosol zur Durchführung des erfindungsgemäßen Verfahrens;
- Fig. 2: eine zweite Ausführungsform der erfindungsgemäßen Vorrichtung; und
- Fig. 3: eine dritte Ausgestaltung der erfindungsgemäßen Vorrichtung mit kaskadierten Verdünnungseinrichtungen.

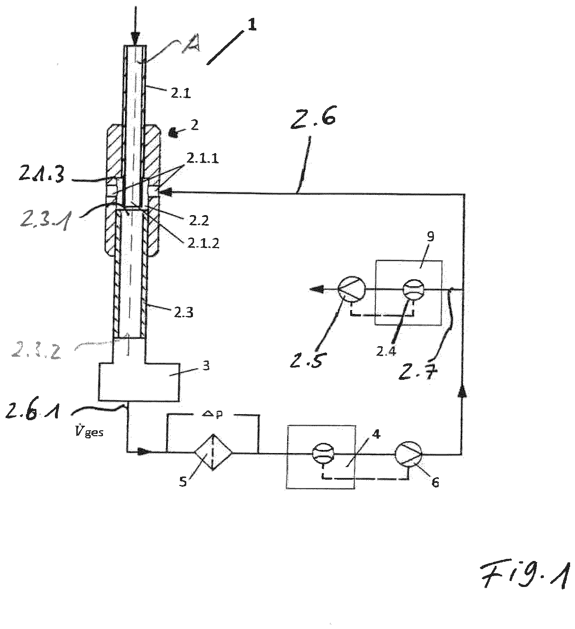

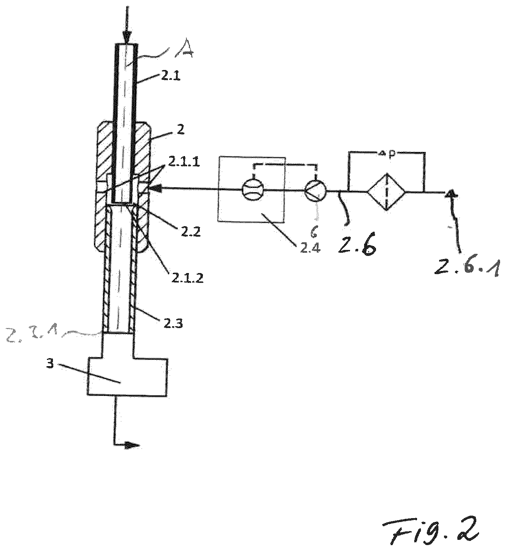

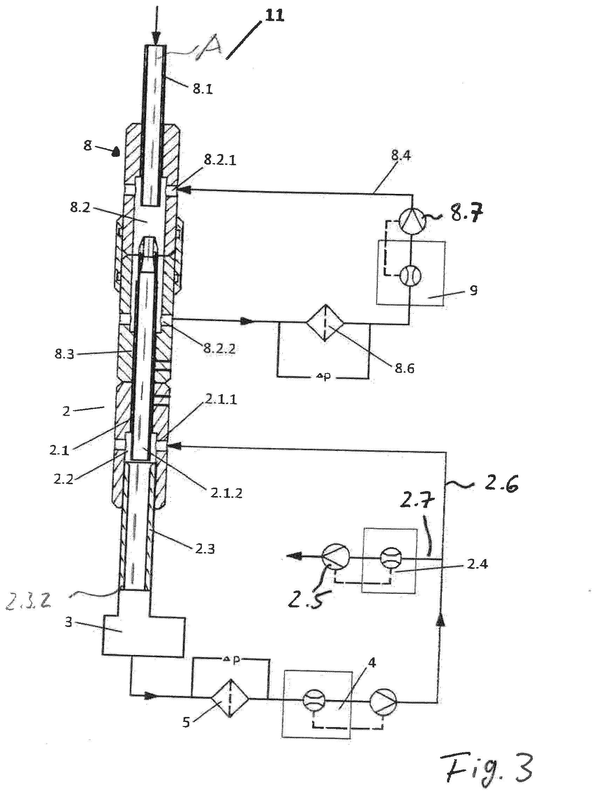

Die erfindungsgemäße Vorrichtung 1 der Fig. 1 weist eine Mischeinrichtung mit einer Mischstufe 2 mit einem Einlassrohr 2.1, einem diesen umgebenden Ringraum 2.2 und einem Austrittsrohr 2.3 mit einer Eintrittsöffnung 2.3.1 auf. Im dargestellten Ausführungsbeispiel ist das Austrittsrohr 2.3 über seinen Auslass 2.3.2, der als Messauslass bezeichnet wird, unmittelbar mit einer an sich bekannten optischen Messeinrichtung 3, wie einem Aerosolspektrometer, zur Bestimmung der Teilchen eines Aerosols hinsichtlich der Zahl der pro Zeiteinheit durch ein Messvolumen der Sensoreinrichtung tretenden Partikel und deren Größe verbunden. Einlassrohr 2.1 und Austrittsrohr 2.3 fluchten, haben also eine gemeinsame Achse A, die auch die Achse des Einlasses der optischen Messeinrichtung ist. Gleiches gilt für die weitere Ausgestaltung der Fig. 2 und 3.

Das aus der Messeinrichtung 3 über eine Rückführleitung 2.6 austretende Austritts-Aerosol wird über einen Massenflussregler (MFC - Mass Flow Controller) 4 von einer Pumpe 6 mit einem vorgegebenen Durchsatz von beispielsweise 5 1/min über eine Reinigungseinrichtung 5 in Form eines Filters abgesaugt. Die Reinigungseinrichtung 5 erzeugt aus dem der Sensoreinrichtung 3 austretenden Austritts-Aerosol ein reines, partikelfreies Reingas oder Gasgemisch (im Folgenden nur als Reingas bezeichnet) - wenn das Trägergas des in das Einlassrohr 2.1 eintretenden Eingangs-Aerosols Luft ist, dann wird durch den Filter 5 Reinluft erzeugt.

Dieses Reingas wird stromauf des Auslassrohrs 2.3 der Mischstufe 2 zu einem vorgegebenen Anteil, beispielsweise zu 90%, also bei der vorgenannten Absaugmenge von 5 l/min mit 4,5 l/min wieder zugeführt - und zwar insbesondere über Öffnungen 2.1.1 in den den Endbereich des Eintrittsrohrs 2.1 umgebenden Ringraum 2.2. Zur Reduzierung des rückgeführten Massenstroms ist ein Abzweig 2.7 mit einer Abzweigpumpe 2.5 und einem Massenflussregler 2.4 vorgesehen, mittels dessen der nicht gewünschte Restanteil von - hier - 5% bzw. 0,5 l/min als Abluft abgezweigt wird.

Das Einlassrohr 2.1 erstreckt sich mit seinem Auslassende 2.1.2 in den Ringraum 2.2, der einen größeren Durchmesser hat als das Rohr 2.1 bzw. dessen Auslassende 2.1.1. Das rückgeführte Reingas wird seitlich vor dem Auslass 2.1.2 des Einlassrohres 2.1 dem Ringraum 2.2 zugeführt.

Zwischen dem Auslassende 2.1.2 des Einlassrohrs 2.1 und einer Eintrittsöffnung 2.3.1 des Auslassrohrs 2.3 ist ein schmaler Abstand oder Spalt, über den auch der Ringraum 2.2 mit der Einlassöffnung des Austrittsrohrs 2.3 in Verbindung steht. Der Spalt beträgt im dargestellten Ausführungsbeispiel 5 mm, was ein Mittelwert ist; er kann aber auch 3 mm bis 8 mm betragen oder aber bis zum Wert des Innendurchmessers des Austrittsrohrs. Der Innendurchmesser von Einlass- und Austrittsrohr beträgt im Ausführungsbeispiel mehr als 4 mm, wobei der Durchmesser des Einlasses des Austrittsrohrs 2.3 geringfügig, d.h. bis zu 1 mm größer ist als der Innendurchmesser des Einlassrohrs 2.1. Konkrete Maße sind beispielsweise 7 mm für den Innendurchmesser des Einlassrohres und 8 mm für den Durchmesser des Einlasses des Austrittsrohres. Die Wandung des Austrittsrohres 2.3 kann im Einlassbereich konisch geneigt sein, so dass der Durchmesser des Austrittsrohres 2.3 im weiteren Verlauf dem des Einlassrohres 2.1 entspricht. Die Innenquerschnitte Πr² von Einlass- und Austrittsrohr sind grundsätzlich größer als 0,1 der Länge L des Einlassrohrs 2.1, r, L gemessen in der Messeinheit mm, so dass die Rohre 2.1, 2.3 insbesondere das Einlassrohr 2.1 keinerlei Kapillarwirkung entfaltet.

Die Breite des Ringraums beträgt im dargestellten Ausführungsbeispiel 0,5 des Innendurchmessers des Eintrittsrohrs 2.1 und kann grundsätzlich zwischen 0,4 und 1,5 des genannten Innendurchmessers liegen.

Durch diese Ausgestaltung wird eine intensive Durchmischung des durch das Rohr 2.1 eintretenden konzentrierten Eingangs-Aerosols mit dem seitlich über den Einlass 2.2.1 zugeführten Reingas ohne einen Verlust durch Ablagerung von Aerosolpartikeln, insbesondere Flüssigpartikeln, erreicht und so das Eintritts-Aerosol in ein verdünntes Austritts-Aerosol gewandelt.

Über das Einlassrohr 2.1 wird das hochkonzentrierte Eintritts-Aerosol mit einem vorgegebenen Volumenstrom der Mischstufe 2 zugeführt. Dieses Eingangs-Aerosol wird mit dem geregelten vorgegebenen Volumenstrom des Reingases aufgrund der konstruktiven Ausgestaltung der Mischstufe 2 intensiv vermischt. Das Eingangs-Aerosol wird - nach einer Anlaufphase - im Messbetrieb zu einem durch das vorgegebene Mischungsverhältnis bestimmten verdünnten aus dem Rohrende 2.3.2 des Austrittsrohres 2.3 austretenden Austritts-Aerosols verdünnt, - hier im Verhältnis 1:10 -, das im Messbetrieb in üblicher Weise in der Messeinrichtung 3 detektiert werden kann, also insbesondere hinsichtlich zeitlichem Partikelstrom und Größe der Partikel. Das aus der Sensoreinrichtung 3 austretende verdünnte Aerosol wird durch den Filter 5 über den Massenflussregler 4 und die Pumpe 6 abgesaugt, dabei zu einem Reingas(-Gemisch) gereinigt und mit dem beschriebenen Anteil von 90% bzw. 4,5 l/min in der ebenfalls beschriebenen Weise der Mischstufe 2 wieder zugeführt. In einer konkreten Ausführung beträgt der Massenfluss des Eintritts-Aerosols beispielsweise Vₑ = 0,5 l/min. nach einer Anlaufphase im Messbetrieb des durch die Messeinrichtung 3 strömenden verdünnten Aerosols Vᵥ = 5 l/min. und des rückgeführten, beigemischten Reingases (Reinluft) Vᵣ = 4,5 l/min., während das Abgas mit 0,5 l/min. ins Freie strömt.

Durch die erfindungsgemäße Vorrichtung und das beschriebene erfindungsgemäße Verfahren wird eine Verdünnung eines konzentrierten Aerosols hinsichtlich der in ihm enthaltenen Partikel mit dem gleichen Gas oder Gasgemisch, insbesondere Luft, wie es das konzentrierte Eintritts-Aerosol hat, erreicht, also insbesondere hinsichtlich Gaszusammensetzung, Gastemperatur und Gasfeuchte.

Die Fig. 2 zeigt demgegenüber eine Variante, bei der nicht rückgeführtes Reingas zur Verdünnung verwendet wird, sondern Fremdgas, beispielsweise aus einem Druckgasbehälter oder auch Fremdluft aus der Umgebung. Demgemäß ist die Reingasleitung 2.6 keine Rückführleitung, sondern eingangsseitig mit einer Fremdgas- oder Fremdluftquelle verbunden, weist aber neben einer Pumpe und einem Massenflussregler vorzugsweise auch eine Reinigungseinrichtung auf, um sicherzustellen, dass dem Eintritts-Aerosol tatsächlich Reingas/-luft zugemischt wird. Ansonsten ist die Ausgestaltung der Fig. 2 wie die der Fig. 1 ausgebildet. Es gelten insbesondere auch die genannten Maße, Messverhältnisse und sonstigen Parameter. Es wird insofern auf die Beschreibung der Fig. 1 verwiesen.

Der Verfahrensablauf ist ebenfalls der gleiche wie bei der Ausgestaltung der Fig. 1 beschrieben.

Die Ausgestaltung der Fig. 3 ist eine Kaskadierung von Mischeinrichtungen. Dabei ist eine Mischeinrichtung mit einer Mischstufe 8 der Mischstufe 2 der Fig. 1 - oder auch der Fig. 2 - vorgeschaltet. Die Fig. 2 zeigt demgegenüber eine Variante, bei der die Ausgestaltung der Mischstufe 8 grundsätzlich in gleicher Weise ausgebildet ist wie die unter Bezugnahme auf die in der Fig. 1 beschriebene und weist ein Einlassrohr 8.1 mit geringerem Durchmesser gegenüber einem umgebenden Ringraum 8.2 auf. Es ist ein Austrittsrohr 8.3 vorgesehen zu einem Aerosol-Einlassrohr 2.1 entsprechend der Fig. 1, 2. Das Austrittsrohr 8.3 weist ebenfalls einen geringeren Querschnitt auf als der ihn umgebende Bereich des Ringraums 8.2. Aus diesem umgebenden Ringraum 8.2 führt auf Höhe eines Einlassabschnitts des Austrittsrohres 8.3 ein seitlicher Auslass 8.2.2 zu einer Rückführleitung 8.4, in der eine Reinigungseinrichtung 8.6, eine Pumpe 8.7 und ein Massenflussregler 9 angeordnet sind. Die Rückführleitung 8.4 mündet über einen seitlichen Einlass 8.2.1 in den das Ende des Rohres 8.1 umgebenden Ringraum. Der Abstand zwischen Ende des Einlassrohrs 8.1 und Einlass des Austrittsrohres 8.3 ist hier größer als bei der Ausgestaltung der Fig. 1, 2, da ein Teil des Austritts-Aerosols - im Messbetrieb beispielsweise 90% - aus dem Ringraum auf der Höhe des Einlassbereichs des Austrittsrohrs 8.3 abgezweigt wird, wobei der Abstand vorzugsweise das bis zum doppelten des Durchmessers des Einlassrohrs 8.1 beträgt. Ansonsten sind die Masse und die Massenverhältnisse grundsätzlich die gleichen wie bei der Ausgestaltung der Fig.1. Der Mischstufe 8 schließt sich dann eine Mischstufe 2 entsprechend der Fig. 1 an. Es könnte auch eine gemäß der Fig. 2 sein, so dass insofern grundsätzlich auf die obigen Beschreibungen verwiesen werden kann.

Durch die Ausgestaltung der Fig. 3 kann eine potenzierte Verdünnung des durch das Eintrittsrohr 8.1 eintretenden Eintritts-Aerosols erreicht werden. Wenn bei der Ausgestaltung der Fig. 3, wie vorstehend unter Bezug auf die Fig. 1 und 2 beschrieben, jede der Mischeinrichtungen 8, 2 eine Verdünnung im Verhältnis von 10:1 bewirkt, so wird durch die Kaskadierung der Ausgestaltung der Fig. 3 eine Verdünnung von 100:1 bewirkt.

Zunächst erfolgt hier eine Verdünnung des Eintritts-Aerosols in der Mischstufe 8 durch die Absaugung des Aerosols über den Auslass 8.2.2, die Reinigung über die Reinigungseinrichtung 8.6 und über den Massenflussregler die geregelte Rückführung des so gereinigten partikelfreien Reingases über den seitlichen Einlass 8.2.1 und dessen Vermischung mit dem über das Rohr 8.1 eintretenden Eintritts-Aerosol. Dieses verdünnte Aerosol (beispielsweise um den Faktor 10:1, wie unter Bezug auf die Fig. 1 beschrieben) wird über das Zwischenrohr 8.3, 2.1 in die Mischstufe 2 geleitet. Das verdünnte Aerosol tritt durch die Sensoreinrichtung 3, wird weiter über die Reinigungseinrichtung 5 zu einem partikelfreien Reingas gereinigt, wobei der Gasabzug über den Massenflussregler erfolgt. Es erfolgt die Abzweigung einer vorbestimmten Menge, wie oben unter Bezug auf die Fig. 1 beschrieben aus dem so gereinigten Reingas, während der vorbestimmte feste Rest des Reingases (hier 90% bzw. 4,5 l/min) über den Einlass 2.1.2 dem Ringraum 2.2 der Mischstufe 2 zugeführt wird und dort, wie gesagt, die weitere Verdünnung von 10:1 bewirkt, so dass insgesamt eine Verdünnung des durch die Sensoreinrichtung 3 strömenden Austritts-Aerosols von 100:1 bewirkt wird.

## Patentansprüche

1. Vorrichtung zum Verdünnen eines Aerosols, mit einem ein Aerosol als Eintrittsaerosol zuführenden Einlassrohr (2.1), einem Austrittsrohr (2.3) mit einer Eintrittsöffnung (2.3.1), die mit endlichem Abstand zum Auslassende (2.1.1) des Einlassrohres (2.1) angeordnet ist, mit einem zumindest einen Endbereich des Eintrittsrohrs umgebenden Ringraum (2.2) und mit einer über eine Austrittsöffnung in den Ringraum (2.2) mündenden Reingasleitung, mit einer optischen Messeinrichtung (3) für das verdünnte Aerosol, **dadurch gekennzeichnet, dass** der Innendurchmesser des Austrittsrohres (2.3) zwischen dem 1,1- und dem 1,3-fachen des Außendurchmessers des Einlassrohres (2.1) liegt.

2. Vorrichtung nach Anspruch 1, **dadurch gekennzeichnet, dass** der Innenquerschnitt Πr² von Einlassrohr (2.1) mindestens 8 mm² beträgt.

3. Vorrichtung nach einem der Ansprüche 1 oder 2, **dadurch gekennzeichnet, dass** der Innenquerschnitt Πr² von Einlass- und Austrittsrohr (2.1, 2.3) größer als das 0,1-fache der Länge L des Einlassrohres (2.1) - r, L bestimmt in mm - ist.

4. Vorrichtung nach einem der vorangehenden Ansprüche, **dadurch gekennzeichnet, dass** die Reingasleitung (2.5) einen Massenflussregler (4) (Mass Flow Controller - MFC) und eine Pumpe (6) oder aber eine geregelte Pumpe und einen Massenflussmesser aufweist.

5. Vorrichtung nach einem der vorangehenden Ansprüche, **gekennzeichnet durch** eine Reinigungseinrichtung (3) in der Reingasleitung (2.5).

6. Vorrichtung nach einem der vorangehenden Ansprüche, **dadurch gekennzeichnet, dass** ein Einlass (2.6.1) der Reingasleitung (2.6) mit einer Fremdgasquelle, insbesondere der Umgebungsluft in Verbindung steht.

7. Vorrichtung nach einem der Ansprüche 1 bis 5, **dadurch gekennzeichnet, dass** ein Einlass (2.5.1) der Reingasleitung (2.5) stromab des Austrittsendes (2.1.2) des Einlassrohres (2.1) für das Eintritts-Aerosol angeordnet ist, dass die Reingasleitung (2.5) eine Reinigungseinrichtung (5) zum Reinigen des über ihre Eintrittsöffnung (2.5.1) in sie eintretenden Austritts-Aerosols aufweist, wobei insbesondere zwischen Austrittsrohr (2.3) und Einlass (2.5.1) zur Reingasleitung (2.5) eine optische Messeinrichtung (3) zum Messen der Partikel des Aerosols angeordnet ist sowie gegebenenfalls mit der vom Austrittsrohr (2.3) zur Öffnung (2.1.1) in den Ringraum (2.2) führenden Reingasleitung (2.5) eine Abzweigleitung (2.6) verbunden ist, in der eine Pumpe (2.5) und ein Massenflussregler (2.4) zum Abzweigen eines bestimmten Teils des Reingases als Abluft angeordnet sind.

8. Vorrichtung nach einem der vorangehenden Ansprüche, **dadurch gekennzeichnet, dass** stromab der Einlassöffnung (2.3.1) des Austrittsrohres (2.3) im Ringraum (2.2) eine seitliche Austrittsöffnung zum Abzweig eines bestimmten Anteils des Austrittaerosols vorgesehen und mit der Reingasleitung verbunden ist.

9. Vorrichtung nach einem der vorangehenden Ansprüche, **gekennzeichnet durch** eine dem Austrittsrohr (2.3) nachgeordnete vom Aerosol durchströmte optische Messeinrichtung, insbesondere durch ein Aerosolspektrometer.

10. Vorrichtung nach einem der vorangehenden Ansprüche, **dadurch gekennzeichnet, dass** Einlassrohr (2.2) und ein zu einer Messeinrichtung (3) führendes Auslassrohr (2.3) miteinander fluchten.

11. System zum Verdünnen eines Aerosols, **dadurch gekennzeichnet, dass** zwei Vorrichtungen nach einem der vorangehenden Ansprüche als Kaskade hintereinander angeordnet sind, wobei ein Austrittsrohr (2.3) einer ersten Vorrichtung mit dem Eintrittsrohr (2.1) einer folgenden Vorrichtung verbunden ist.

12. Verfahren zum Verdünnen eines Aerosols, wobei das Aerosol als Eingangs-Aerosol durch ein Einlassrohr (2.1) zugeführt wird, partikelfreies Reingas einem einen Endbereich des Einlassrohres umgebenden Ringraum (2.2) zugeführt wird und mit dem zugeführten Eingangs-Aerosol zu einem verdünnten Austritts-Aerosol vermischt wird, wobei das verdünnte Austritts-Aerosol über ein Innendurchmesser zwischen dem 1,1- und dem 1,3-fachen des Außendurchmessers des Einlassrohrs aufweisenden Austrittsrohr (2.3) einer optischen Messeinrichtung (3) zugeleitet wird und der Massenfluss des der Messeinrichtung zugeleiteten Aerosols und des zugemischten Reingases in einem festen Verhältnis gehalten werden.

13. Verfahren nach Anspruch 12, **dadurch gekennzeichnet, dass** Eintritts-Aerosol über ein Einlassrohr (2.1) zugeführt wird, dessen Innenquerschnitt Πr², mindestens 8 mm² beträgt.

14. Verfahren nach Anspruch 12 oder 13, **dadurch gekennzeichnet, dass** das Eintritts-Aerosol über das Einlassrohr (2.1) zugeführt wird, dessen Innenquerschnitt Πr² größer als das 0,1-fache der Länge des Einlassrohres (2.1) - r, L bestimmt in mm - ist.

15. Verfahren nach einem der Ansprüche 12 bis 14, **dadurch gekennzeichnet, dass** der Ringraum (2.2) indem das Reingas geleitet wird, 0,4- bis 2-fache Breite, insbesondere die 0,5- bis 1-fache Breite des Innendurchmessers des Einlassrohres (2.1) hat.

16. Verfahren nach einem der Ansprüche 12 bis 15, **dadurch gekennzeichnet, dass** das Reingas dem Eintritts-Aerosol in einem Spalt zwischen Auslassende (2.1.2) des Einlassrohrs (2.1) und Einlassöffnung (2.3.1) des Austrittsrohrs (2.3) zugeführt wird, der geringer als der Innendurchmesser von Einlassrohr (2.1) oder Austrittsrohr (2.3) ist und vorzugsweise nicht mehr als 6 mm, insbesondere nicht mehr als 5 mm beträgt.

17. Verfahren nach einem der Ansprüche 12 bis 16, **dadurch gekennzeichnet, dass** das durch Mischen von Eintritts-Aerosol und Reingas erzeugte verdünnte Austritts-Aerosol in einem Austrittsrohr (2.3) mit einem über dem Innendurchmesser des Einlassrohres (2.1) liegenden Innendurchmesser eintritt, wobei der Unterschied der Innendurchmesser mindestens 1 mm bis 2 mm beträgt.

18. Verfahren nach einem der Ansprüche 12 bis 17, **dadurch gekennzeichnet, dass** das Reingas dem Eintritts-Aerosol in einem fest vorgegebenen Volumendurchflussverhältnis zugeführt wird.

19. Verfahren nach einem der Ansprüche 12 bis 18, **dadurch gekennzeichnet, dass** das Verhältnis von Volumendurchfluss des Eintritts-Aersols und des diesem zugeführten Reingases durch einen Massenflussregler (MFC - Mass Flow Controller) bestimmt wird.

20. Verfahren nach einem der Ansprüche 12 bis 19, **dadurch gekennzeichnet, dass** das Eintritts-Aerosol einem Ringraum (2.2) durch ein Einlassrohr (2.1) zugeführt wird, das einen geringeren Querschnitt hat als der Ringraum (2.2) und dass das dem Ringraum (2.2) zugeführte Reingas oberhalb eines Auslassendes (2.1.2) des Einlassrohrs (2.1) in den Ringraum (2.2) eingeleitet wird, wodurch eine intensive Durchmischung von Eintritts-Aerosol und Reingas bewirkt wird.

21. Verfahren nach einem der Ansprüche 12 bis 20, **dadurch gekennzeichnet, dass** das Austritts-Aerosol vor der Reinigung durch eine optische Messeinrichtung (3) geleitet wird, wobei insbesondere übermäßiges Reingas als Abluft abgeführt wird.

22. Verfahren nach einem der Ansprüche 12 bis 21, **dadurch gekennzeichnet, dass** stromab des Ringraums (2.2) nur ein fester Teil des Austritts-Aerosols zur Reinigung abgezweigt und als partikelfreies Reingas stromauf eines Mischraums wieder zugeführt wird.

23. Verfahren nach einem der Ansprüche 12 bis 22, **dadurch gekennzeichnet, dass** das nicht abgezweigte Austritts-Aerosol durch eine optische Messeinrichtung (3), insbesondere ein Aersolspektrometer geführt wird.

24. Verfahren nach einem der Ansprüche 12 bis 23, **dadurch gekennzeichnet, dass** das zu messende Aerosol entlang einer Achse (A) von einem Einlassrohr (2.1) durch ein Auslassrohr (2.3) zu einer Messeinrichtung (3), insbesondere einem Aersolspektrometer strömt.

25. Verfahren nach einem der Ansprüche 12 bis 24, **dadurch gekennzeichnet, dass** ein nicht abgezweigter Teil des Austritts-Aerosols einem weiteren Ringraum (2.2) zugeführt wird und dort eine weitere Verdünnung gemäß einem der Ansprüche 17 bis 23 durchgeführt wird.

## Claims

1. A device for diluting an aerosol, with an inlet pipe (2.1) feeding an aerosol as an inlet aerosol, an outlet pipe (2.3) with an inlet opening (2.3.1) arranged at a finite distance from the outlet end (2.1.1) of the inlet pipe (2.1), with an annular space (2.2) surrounding at least an end area of the inlet pipe and with a clean gas line opening into the annular space (2.2) via an outlet opening, with an optical measuring device (3) for the diluted aerosol, **characterized in that** the internal diameter of the outlet pipe (2.3) is between 1.1 and 1.3 times the external diameter of the inlet pipe (2.1).

2. A device in accordance with claim 1, **characterized in that** the internal cross section πr² of the inlet pipe (2.1) is at least 8 mm².

3. A device in accordance with one of the claims 1 or 2, **characterized in that** the internal cross section πr² of the inlet and outlet pipe (2.1, 2.3) is greater than 0.1 times the length L of the inlet pipe (2.1), r and L being determined in mm.

4. A device in accordance with one of the preceding claims, **characterized in that** the clean gas line (2.5) has a mass flow controller (4) (MFC) and a pump (6) or a controlled pump and a mass flow meter.

5. A device in accordance with one of the preceding claims, **characterized by** a purification device (3) in the clean gas line (2.5).

6. A device in accordance with one of the preceding claims, **characterized in that** the inlet (2.6.1) of the clean gas line (2.6) is in connection with a gas source, in particular the air of the surrounding area.

7. A device in accordance with one of the claims 1 to 5, **characterized in that** an inlet (2.5.1) of the clean gas line (2.5) is arranged downstream of the outlet end (2.1.2) of the inlet pipe (2.1) for the inlet aerosol, that the clean gas line (2.5) has a purification device (5) for purifying the outlet aerosol entering the clean gas line (2.5) via a clean gas line inlet opening (2.5.1), wherein in particular an optical measuring device (3) is arranged between the outlet pipe (2.3) and the inlet (2.5.1) to the clean gas line (2.5) for measuring the particles of the aerosol and is possibly connected to a branch-off line (2.6) of a clean gas line (2.5) leading from the outlet pipe (2.3) to the opening (2.1.1) in the annular space (2.2), wherein a pump (2.5) and a mass flow controller (2.4) are located in the branch-off line (2.6) to branch off a certain portion of the clean gas as waste air.

8. A device in accordance with one of the preceding claims, **characterized in that** a lateral outlet opening is provided downstream of the inlet opening (2.3.1) of the outlet pipe (2.3) in the annular space (2.2) for branching off a certain portion of the outlet aerosol and is connected to the clean gas line.

9. A device in accordance with one of the preceding claims, **characterized by** an optical measuring device arranged downstream of the outlet pipe (2.3) and through which the aerosol flows, in particular by an aerosol spectrometer.

10. A device in accordance with one of the preceding claims, **characterized in that** the inlet pipe (2.2) and an outlet pipe (2.3) leading to a measuring device (3) are aligned with one another.

11. A system for diluting an aerosol, **characterized in that** two devices according to one of the preceding claims are arranged as a cascade one after another, wherein the outlet pipe (2.3) of the first device is connected to the inlet pipe (2.1) of the following device.

12. A process for diluting an aerosol, wherein the aerosol is fed as an inlet aerosol through an inlet pipe (2.1), particle-free clean gas is fed into an annular space (2.2) surrounding an end area of the inlet pipe and is mixed with the fed inlet aerosol to form a diluted outlet aerosol, wherein the diluted outlet aerosol is fed to an optical measuring device (3) via an outlet pipe (2.3) having an inner diameter of between 1.1 and 1.3 times the outer diameter of the inlet pipe and the mass flow of the aerosol sent to the measuring device and the added clean gas is maintained at a fixed ratio.

13. A process in accordance with claim 12, **characterized in that** inlet aerosol is fed via the inlet pipe (2.1) having an internal cross section πr² of at least 8 mm².

14. A process in accordance with one of claims 12 or 13, **characterized in that** the inlet aerosol is fed via the inlet pipe (2.1), wherein its internal cross section πr² is greater than 0.1 times the length L of the inlet pipe (2.1), r and L being determined in mm.

15. A process in accordance with one of claims 12 to 14, **characterized in that** the annular space (2.2) in which the clean gas is sent has a width that is 0.4 to 2 times, in particular 0.5 to 1 times, the width of the internal diameter of the inlet pipe (2.1).

16. A process in accordance with one of claims 12 to 15, **characterized in that** the clean gas is fed to the inlet aerosol in a gap between an outlet end (2.1.2) of the inlet pipe (2.1) and an inlet opening (2.3.1) of the outlet pipe (2.3), which gap is smaller than an internal diameter of the inlet pipe (2.1) or the outlet pipe (2.3) and does preferably not exceed 6 mm, in particular not exceed 5 mm.

17. A process in accordance with one of claims 12 to 16, **characterized in that** the diluted outlet aerosol generated by mixing the inlet aerosol and the clean gas enters an outlet pipe (2.3) with an internal diameter greater than the internal diameter of the inlet pipe (2.1), wherein the difference of the internal diameters is at least 1 mm to 2 mm.

18. A process in accordance with one of claims 12 to 17, **characterized in that** the clean gas is fed to the inlet aerosol at a preset fixed volume flow ratio.

19. A process in accordance with one of claims 12 to 18, **characterized in that** the ratio of a volume flow of the inlet aerosol to that of the clean gas fed to the same is determined by a mass flow controller (MFC - Mass Flow Controller).

20. A process in accordance with one of claims 12 to 19, **characterized in that** the inlet aerosol is fed to an annular space (2.2) through an inlet pipe (2.1), which has a smaller cross section than the annular space (2.2) and that clean gas fed to the annular space (2.2) is introduced into the annular space (2.2) above an outlet (2.1.2) of the inlet pipe (2.1) so that an intensive mixing of the inlet aerosol and the clean gas is brought about.

21. A process in accordance with one of claims 12 to 20, **characterized in that** the outlet aerosol is sent through an optical measuring device (3) before purification, wherein in particular excess clean gas is removed as waste air.

22. A process in accordance with one of claims 12 to 21, **characterized in that** downstream of the annular space (2.2) only a fixed portion of the outlet aerosol is branched off for purification and is fed again as particle-free clean gas upstream of a mixing space.

23. A process in accordance with one of claims 12 to 22, **characterized in that** the outlet aerosol that is not branched off is sent through an optical measuring device (3), in particular through an aerosol spectrometer.

24. A process in accordance with one of claims 12 to 23, **characterized in that** the aerosol to be measured flows along an axis (A) from an inlet pipe (2.1) through an outlet pipe (2.3) to a measuring device (3), in particular an aerosol spectrometer.

25. A process in accordance with one of claims 12 to 24, **characterized in that** a portion of the outlet aerosol that is not branched off is fed to another annular space (2.2) and an additional dilution is carried out there according to the claims 17 to 23.

## Revendications

1. Dispositif de dilution d'un aérosol, avec un tube d'admission (2.1) amenant un aérosol sous la forme d'un aérosol entrant, avec un tube de sortie (2.3) doté d'une ouverture d'entrée (2.3.1) disposée à une distance finie par rapport à l'extrémité d'évacuation (2.1.1) du tube d'admission (2.1), avec un espace annulaire (2.2) entourant au moins une zone d'extrémité du tube entrant et avec une conduite de gaz purifié débouchant dans l'espace annulaire (2.2) via une ouverture de sortie, avec un dispositif de mesure optique (3) pour l'aérosol dilué, **caractérisé en ce que** le diamètre intérieur du tube de sortie (2.3) est compris entre 1,1 et 1,3 fois le diamètre extérieur du tube d'admission (2.1).

2. Dispositif selon la revendication 1, **caractérisé en ce que** la section transversale intérieure πr² du tube d'admission (2.1) est au moins de 8 mm².

3. Dispositif selon l'une quelconque des revendications 1 ou 2, **caractérisé en ce que** la section transversale intérieure πr² du tube d'admission et de sortie (2.1, 2.3) est plus importante de 0,1 fois la longueur L du tube d'admission (2.1) - r, L étant définis en mm.

4. Dispositif selon l'une quelconque des revendications précédentes, **caractérisé en ce que** la conduite de gaz purifié (2.5) comporte un système de régulation de débit massique (4) (Mass Flow Controller en anglais - MFC) et une pompe (6) ou une pompe réglée et un système de mesure de débit massique.

5. Dispositif selon l'une quelconque des revendications précédentes, **caractérisé par** la présence d'un dispositif de nettoyage (3) placé dans la conduite de gaz purifié (2.5).

6. Dispositif selon l'une quelconque des revendications précédentes, **caractérisé en ce qu'**une admission (2.6.1) de la conduite de gaz purifié (2.6) est reliée à une source de gaz externe, notamment à l'air ambiant.

7. Dispositif selon l'une quelconque des revendications 1 à 5, **caractérisé en ce qu'**une admission (2.5.1) de la conduite de gaz purifié (2.5) est disposée en aval de l'extrémité de sortie (2.1.2) du tube d'admission (2.1) pour l'aérosol entrant, que la conduite de gaz purifié (2.5) comporte un dispositif de nettoyage (5) pour nettoyer l'aérosol sortant pénétrant à l'intérieur via son ouverture d'entrée (2.5.1), un dispositif de mesure optique (3) étant notamment disposé entre le tube de sortie (2.3) et l'admission (2.5.1) menant à la conduite de gaz purifié (2.5) pour mesurer les particules de l'aérosol et une conduite de dérivation (2.6) étant reliée le cas échéant à la conduite de gaz purifié (2.5) allant du tube de sortie (2.3) menant à l'ouverture (2.1.1) jusque dans l'espace annulaire (2.2), une pompe (2.5) et un système de régulation de débit massique (2.4) étant disposés dans ladite conduite pour dériver une partie définie du gaz purifié sous la forme d'air sortant.

8. Dispositif selon l'une quelconque des revendications précédentes, **caractérisé en ce qu'**en aval de l'ouverture d'admission (2.3.1) du tube de sortie (2.3) placé dans l'espace annulaire (2.2), une ouverture latérale de sortie est reliée à la conduite de gaz purifié pour dériver de façon prévue une partie définie de l'aérosol sortant.

9. Dispositif selon l'une quelconque des revendications précédentes, **caractérisé par** la présence d'un dispositif de mesure optique placé en aval du tube de sortie (2.3) traversé par l'aérosol, notamment par un spectromètre d'aérosol.

10. Dispositif selon l'une quelconque des revendications précédentes, **caractérisé en ce que** le tube d'admission (2.2) et un tube d'évacuation (2.3) conduisant à un dispositif de mesure (3) sont alignés l'un sur l'autre.

11. Système de dilution d'un aérosol, **caractérisé en ce que** deux dispositifs selon l'une quelconque des revendications précédentes sont disposés en cascade l'un derrière l'autre, un tube de sortie (2.3) d'un premier dispositif étant relié au tube d'entrée (2.1) d'un dispositif suivant.

12. Procédé de dilution d'un aérosol, dans lequel l'aérosol est amené sous la forme d'un aérosol entrant via un tube d'admission (2.1), dans lequel du gaz purifié sans particules est amené à un espace annulaire (2.2) entourant une zone d'extrémité du tube d'admission et mélangé à l'aérosol entrant amené pour former un aérosol sortant dilué, l'aérosol sortant dilué étant amené au tube de sortie (2.3), comportant un diamètre intérieur compris entre 1,1 fois et 1,3 fois le diamètre extérieur du tube d'admission, d'un dispositif de mesure optique (3) et le débit massique de l'aérosol amené au dispositif de mesure et du gaz purifié mélangé étant maintenus selon un rapport fixe.

13. Procédé selon la revendication 12, **caractérisé en ce que** l'aérosol entrant est amené via un tube d'admission (2.1) dont la section transversale intérieure πr² est au moins de 8 mm².

14. Procédé selon la revendication 12 ou 13, **caractérisé en ce que** l'aérosol entrant est amené via le tube d'admission (2.1) dont la section transversale intérieure πr² est supérieure à 0,1 fois la longueur du tube d'admission (2.1) - r, L étant définis en mm.

15. Procédé selon l'une quelconque des revendications 12 à 14, **caractérisé en ce que** l'espace annulaire (2.2) dans lequel le gaz purifié est amené fait 0,4 fois à 2 fois la largeur, notamment 0,5 fois à une 1 fois la largeur du diamètre intérieur du tube d'admission (2.1).

16. Procédé selon l'une quelconque des revendications 12 à 15, **caractérisé en ce que** le gaz purifié est amené à l'aérosol entrant dans une fente prévue entre l'extrémité d'évacuation (2.1.2) du tube d'admission (2.1) et l'ouverture d'admission (2.3.1) du tube de sortie (2.3) qui est plus réduite que le diamètre intérieur du tube d'admission (2.1) ou du tube de sortie (2.3) et de préférence non supérieure à 6 mm, notamment non supérieure à 5 mm.

17. Procédé selon l'une quelconque des revendications 12 à 16, **caractérisé en ce que** l'aérosol sortant dilué produit par mélange d'aérosol entrant et de gaz purifié s'introduit dans un tube de sortie (2.3) avec un diamètre intérieur situé au-delà du diamètre intérieur du tube d'admission (2.1), la différence du diamètre intérieur étant d'au moins 1 mm à 2 mm.

18. Procédé selon l'une quelconque des revendications 12 à 17, **caractérisé en ce que** le gaz purifié est amené à l'aérosol entrant dans un rapport de débit volumique prédéfini fixe.

19. Procédé selon l'une quelconque des revendications 12 à 18, **caractérisé en ce que** le rapport du débit volumique de l'aérosol entrant et du gaz purifié amené dans celui-ci est défini par un système de régulation de débit massique (MFC - Mass Flow Controller en anglais).

20. Procédé selon l'une quelconque des revendications 12 à 19, **caractérisé en ce que** l'aérosol entrant est amené à un espace annulaire (2.2) par le biais d'un tube d'admission (2.1) qui présente une section transversale davantage réduite que l'espace annulaire (2.2) et que le gaz purifié amené à l'espace annulaire (2.2) est amené dans l'espace annulaire (2.2) via une extrémité d'évacuation (2.1.2) du tube d'admission (2.1), entraînant un mélange intensif de l'aérosol entrant et du gaz purifié.

21. Procédé selon l'une quelconque des revendications 12 à 20, **caractérisé en ce que** l'aérosol sortant est amené à travers un dispositif de mesure optique (3) avant le nettoyage, le gaz purifié en excédant étant notamment évacué sous la forme d'air sortant.

22. Procédé selon l'une quelconque des revendications 12 à 21, **caractérisé en ce qu'**en aval de l'espace annulaire (2.2), seule une part fixe de l'aérosol sortant est dérivée en vue de son nettoyage et est ramenée sous la forme de gaz purifié sans particules en amont d'une chambre de mélange.

23. Procédé selon l'une quelconque des revendications 12 à 22, **caractérisé en ce que** l'aérosol sortant non dérivé est amené à travers un dispositif de mesure optique (3), notamment un spectromètre d'aérosol.

24. Procédé selon l'une quelconque des revendications 12 à 23, **caractérisé en ce que** l'aérosol à mesurer s'écoule le long d'un axe (A) depuis un tube d'admission (2.1) traversant un tube d'évacuation (2.3) jusqu'à un dispositif de mesure (3), notamment un spectromètre d'aérosol.

25. Procédé selon l'une quelconque des revendications 12 à 24, **caractérisé en ce qu'**une partie non dérivée de l'aérosol sortant est amenée à un espace annulaire (2.2) supplémentaire et qu'une dilution supplémentaire selon l'une quelconque des revendications 17 à 23 y est réalisée.
